# EUROPEAN PATENT APPLICATION

(11) **EP 2 639 672 A2**
(43) Date of publication of application: **18.09.2013**
(21) Application number: 13151664.3
(22) Date of filing: 17.01.2013
(51) Int. Cl.: G06F 3/01, G06F 3/03

(54) **Gesture input apparatus, control program, computer-readable recording medium, electronic device, gesture input system, and control method of gesture input apparatus**

(30) Priority: 15.03.2012 JP 2012059391
(71) Applicant: OMRON CORPORATION, Kyoto-shi, Kyoto 600-8530 (JP)
(72) Inventor: Ohta, Takashi c/o Omron Corporation, Kyoto, 600-8530 (JP)
(74) Representative: Isarpatent

(57) **Abstract**

A gesture input apparatus that recognizes gesture made by a gesture actor in front of a camera, and controls a control target device on the basis of the recognized gesture is provided. The gesture input apparatus comprising a sensor detection part configured to detect an input from a sensor, and a gesture recognition part configured to start gesture recognition using an image captured by the camera, on the basis of a time when the input from the sensor is detected.

## Description

### BACKGROUND OF THE INVENTION

### 1. TECHNICAL FIELD

The present invention relates to a gesture input apparatus, a control program, a computer-readable recording medium, a gesture input system, an electronic device, and a control method of the gesture input apparatus for generating a control signal for controlling a device by recognizing user's gesture.

### 2. RELATED ART

In recent years, a demand for a user interface based on gesture recognition using a camera has been increasing. With the user interface based on the gesture recognition, a user can easily perform operation without using any particular input equipment, but user's gesture may be falsely recognized.

For this reason, in the user interface based on the gesture recognition, it is desired to improve the accuracy of gesture recognition. In particular, when a starting point of gesture recognition cannot be detected, false recognition of gesture increases, and therefore, in the past, various techniques have been suggested to recognize the starting point of user's gesture with a high degree of accuracy.

For example, Japanese Patent Laid-Open No. H9-311759 (published on December 2, 1997) describes a gesture recognition apparatus for recognizing a start of gesture at which a penlight possessed by a user is turned on and recognizing an end of gesture at which the penlight is turned off, wherein the type of gesture is recognized on the basis of the movement state of the penlight from the start to the end.

However, in the technique of Japanese Patent Laid-Open No. H9-311759 (published on December 2, 1997), it is necessary to constantly perform image processing to track a penlight in order to detect the penlight that is turned on, and this requires a high level of processing load. Moreover, the penlight is subjected to image recognition, and only the starting point of the gesture is recognized, and therefore, when the accuracy of the image recognition is low, the accuracy of the recognition of the starting point is reduced. Therefore, the technique in Japanese Patent Laid-Open No. H9-311759 (published on December 2, 1997) has a drawback in that a long processing time is required for the recognition of the starting point of the gesture, and a sufficient level of accuracy cannot be obtained.

Therefore, under the current circumstances, no effective measure has not yet been presented for the issue of recognizing the starting point of the gesture recognition with a high degree of accuracy.

### SUMMARY

The present invention has been devised to solve the problems described above, and an object thereof is to provide a gesture input apparatus and the like capable of detecting a starting point of gesture recognition efficiently with a high degree of accuracy, thus improving the accuracy of gesture recognition.

In accordance with one aspect of the present invention, in order to solve the above problem, a gesture input apparatus according to at least one embodiment of the present invention is a gesture input apparatus that recognizes gesture made by a gesture actor in front of a camera, and controls a control target device on the basis of the recognized gesture, and the gesture input apparatus includes a sensor detection part configured to detect an input from a sensor, and a gesture recognition part configured to start gesture recognition using an image captured by the camera, on the basis of a time at which the input from the sensor is detected.

In accordance with another aspect of the present invention, in order to solve the above problem, a control method of a gesture input apparatus according to at least one embodiment the present invention is a control method of a gesture input apparatus that recognizes gesture made by a gesture actor in front of a camera, and controls a control target device on the basis of the recognized gesture, and the control method includes a sensor detection step for detecting an input from a sensor, and a gesture recognition step for starting gesture recognition using an image captured by the camera, on the basis of a time when the input from the sensor is detected.

The gesture actor means a subject who makes gesture, and is a user who operates the control target device with the gesture. The gesture actor is not limited to a person. The gesture actor may be an animal or a moving object. The gesture means a shape or operation of a particular portion of the gesture actor (feature amount), or a combination thereof.

For example, when the gesture actor is a person, it means a predetermined shape or predetermined operation of a body of that person, such as the face (eyes, mouth, and the like), hands, arms, torso, and legs of the person, or a combination thereof.

When the gesture actor is a person, examples of predetermined operations include "rotate hand", "wave hand", and "make fist and open hand". The predetermined operation includes stationary state.

In the configuration, gesture of the gesture actor is recognized, and a control target device is controlled on the basis of the recognized gesture. In the gesture recognition, for example, a method for analyzing the image data, and recognizing the gesture according to pattern recognition may be employed.

In the configuration, an input from the sensor is detected. The sensor detects temperature, pressure, flow rate, light, magnetism, sound wave, electromagnetic wave, and the like. The sensor may measure a physical quantity thereof, may detect the amount of change of the physical quantity, and may sense change of the physical state thereof by detecting the physical quantity and the amount of change thereof.

The sensor may be configured to be capable of measuring a physical quantity around the gesture actor, or measure change of the physical quantity. According to such configuration, a sensor can sense that a measurement of a physical quantity and the like around the gesture actor is made, and can determine whether the gesture actor exists or not.

The method for determining whether the gesture actor exists or not from the sensor data obtained from the sensor is not particularly limited, and for example, a method and the like for detecting an object with infrared light and the like may be employed.

A determination may be made directly by detecting a physical quantity and the like of the gesture actor itself, or a determination may be made indirectly by detecting a physical quantity and the like of an object accompanying the gesture actor. When gesture actor is a person, the object accompanying the gesture actor includes, e.g., an object possessed by the person. For example, the object accompanying the gesture actor includes, e.g., a cellular phone and the like possessed by the person.

More specifically, when the gesture actor or the object accompanying the gesture actor generates heat, a determination is made as follows. When it is observed that a temperature around the sensor is equal to or more than a predetermined value, the gesture actor can be determined to exist. When a person has a cellular phone, existence of the gesture actor can be determined by sensing a radio wave transmitted by the cellular phone.

As described above, when input from the sensor is detected, it is considered that it is highly possible that the gesture actor starts making gesture.

According to the configuration, gesture recognition using an image captured by the camera is started on the basis of a time when the input from the sensor is detected, and therefore, the gesture recognition can be started when it is highly possible that the gesture actor starts making gesture. Regarding the criteria, a time point at which the gesture actor is determined to exist may be adopted as a starting point, or a time point a predetermined period of time passed after that time point may be adopted as a starting point.

As a result, a starting point of the gesture recognition can be detected efficiently with a high degree of accuracy, and there is an advantage in that the accuracy of the gesture recognition can be improved.

In the gesture input apparatus according to at least one embodiment of the present invention, the sensor is preferably a radio wave sensing sensor configured to sense radio wave used for wireless communication, and the sensor detection part is preferably one that detects the input from the radio wave sensing sensor.

According to the configuration, for example, when the gesture actor carries a portable communication terminal such as a cellular phone, the gesture actor can be sensed indirectly by sensing the radio wave used for wireless communication of the cellular phone.

In the gesture input apparatus according to at least one embodiment of the present invention, the gesture recognition part preferably terminates the gesture recognition when the gesture recognition is successfully completed.

According to the configuration, subsequent gesture recognition is started when the gesture actor is sensed again. More specifically, according to the configuration, every time gesture is input, a series of operation for sensing the gesture actor and performing the gesture recognition is performed.

As described above, the accuracy of the gesture recognition can be improved by sensing the gesture actor and performing the gesture recognition every time gesture is input.

In the gesture input apparatus according to at least one embodiment of the present invention, the gesture recognition part preferably terminates the gesture recognition when a predetermined period of time passes since a time point at which the gesture recognition is started.

According to the configuration, the gesture recognition is terminated when the gesture recognition is not successfully completed within the predetermined period of time. Therefore, this can avoid continuation of unnecessary gesture recognition when the gesture actor is sensed but the gesture actor does not make any gesture.

In the gesture input apparatus according to at least one embodiment of the present invention, when the sensor detection part detects the input from the sensor, the camera is preferably turned on.

When it is highly possible that the gesture actor does not exist, no gesture is input. Therefore, in such case, useless power consumption of the camera can be reduced by turning off the camera.

According to the configuration, even when the gesture actor does not exist and the camera is off, the camera can be turned on when the gesture actor is sensed, and the camera can start capturing an image. Therefore, useless power consumption of the camera can be reduced.

It should be noted that the gesture input apparatus may be achieved with a computer, and in this case, the scope of the present invention also includes a control program for achieving the gesture input apparatus using a computer by causing the computer to operate as each of the parts and a computer-readable recording medium having the control program recorded thereon.

In accordance with still another aspect of the present invention, an electronic device includes the gesture input apparatus, a sensor configured to output sensor data to the gesture input apparatus, a camera configured to output a captured image to the gesture input apparatus, and a control target device controlled by the gesture input apparatus.

In accordance with yet another aspect of the present invention, an electronic device includes the gesture input apparatus, an interface configured to connect with a sensor that outputs sensor data, an interface configured to connect with a camera that outputs a captured image, and a control target device controlled by the gesture input apparatus, and a gesture input system includes the gesture input apparatus, a sensor configured to output sensor data to the gesture input apparatus, a camera configured to output a captured image to the gesture input apparatus, a control target device controlled by the gesture input apparatus.

In the gesture input system, for example, the control target device may be installed in a room, the sensor may be configured to capable of sensing a gesture actor entering into the room from an entrance, and the camera may be configured to capable of capturing an image in a predetermined range around the entrance of the room.

According to the configuration, when the control target device is installed in a room, the accuracy of the gesture recognition can be improved.

The gesture input apparatus according to the present invention includes a sensor detection part configured to detect an input from a sensor and a gesture recognition part configured to start gesture recognition using an image captured by the camera, on the basis of a time at which the input from the sensor is detected.

The control method of the gesture input apparatus according to the present invention includes a sensor detection step for detecting an input from a sensor and a gesture recognition step for starting gesture recognition using an image captured by the camera, on the basis of a time when the input from the sensor is detected.

Therefore, a starting point of gesture can be detected efficiently with a high degree of accuracy, and thus the accuracy of gesture recognition can be improved.

### BRIEF DESCRIPTION OF THE DRAWINGS

FIG. 1 is a functional block diagram illustrating an example of a functional configuration of a gesture input system including a gesture input apparatus 1 according to an embodiment of the present invention;
FIG. 2 is a figure illustrating an example of gesture recognition data stored in a storage unit provided in the gesture input apparatus;
FIG. 3 is a figure illustrating an example of a control signal table stored in the storage unit;
FIG. 4 is a flowchart illustrating an example of gesture input processing of the gesture input apparatus;
FIG. 5 is a functional block diagram illustrating an example of a functional configuration of a gesture input system according to another embodiment of the present invention;
FIG. 6 is a figure illustrating an example of a control content table stored in a storage unit of a television receiver;
FIGS. 7A to 7D are figures illustrating an example of a usage mode where the television receiver is turned on with the gesture input system;
FIG. 8 is a functional block diagram illustrating an example of a functional configuration of a gesture input system according to still another embodiment of the present invention;
FIGS. 9A to 9C are figures illustrating an example of a usage mode where an illumination device is turned on with the gesture input system;
FIG. 10 is a figure illustrating a modification of the gesture input system;
FIG. 11 is a functional block diagram illustrating an example of a functional configuration of a gesture input system of still another embodiment of the present invention;
FIGS. 12A to 12C are figures illustrating an example of a usage mode where an air conditioner is turned on with the gesture input system; and
FIG. 13 is a figure illustrating a gesture input system according to still another embodiment of the present invention.

### DETAILED DESCRIPTION

Hereinafter, preferred embodiments of the present invention will be described with reference to the drawings.

### [First embodiment]

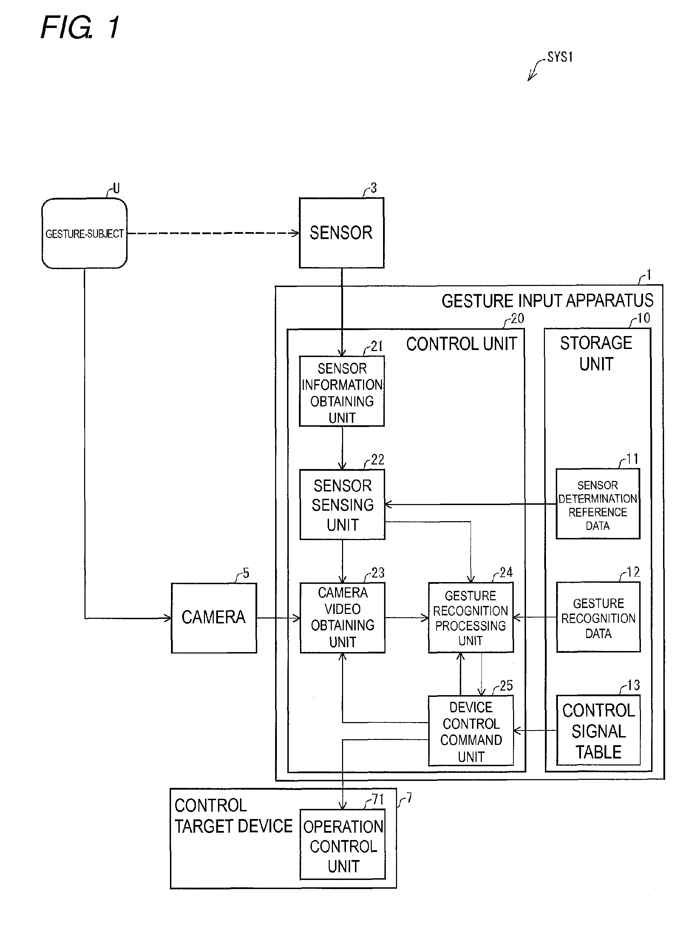

A gesture input system SYS1 according to an embodiment of the present invention will be explained with reference to FIGS. 1 to 4 below.

### (Overview of system)

First, the entire gesture input system SYS1 including the gesture input apparatus 1 will be explained with reference to FIG. 1.

The gesture input system SYS1 includes a gesture input apparatus 1, a sensor 3, a camera 5, and a control target device 7.

The gesture input apparatus 1 recognizes gesture made by a gesture actor U on the basis of an image which is input from the camera 5, and causes the control target device 7 to execute operation according to the recognized gesture.

The gesture actor U means a subject who makes the gesture, and is a user who operates the control target device 7 with the gesture. The gesture means a shape or operation of a particular portion of the gesture actor U (feature amount), or a combination thereof. For example, when the gesture actor U is a person, it means a predetermined shape or predetermined operation of a body of that person, such as the face (eyes, mouth, and the like), hands, arms, torso, and legs of the person, or a combination thereof. This operation includes stationary state.

Further, the gesture input apparatus 1 determines a start period of the gesture recognition on the basis of sensor data given by the sensor 3. The configuration of the gesture input apparatus 1 will be explained later in detail.

The sensor 3 measures a physical quantity such as temperature, pressure, flow rate, light, magnetism, sound wave, and electromagnetic wave, detects the amount of change of the physical quantity, and senses change of the physical state thereof by detecting the physical quantity and the amount of change thereof. The sensor 3 is provided to sense a physical quantity and the like around the gesture actor. The sensor 3 outputs a detection result as sensor data. It should be noted that the sensor 3 may be constituted by a single sensor, or may be constituted by composite sensors. For example, the sensor 3 may include a sound wave sensor and a radio wave sensing sensor.

The sensor 3 is provided to collect sensor data for directly or indirectly sensing the gesture actor U. In FIG. 1, the gesture actor U and the sensor 3 connected via a broken line arrow indicates that this includes both of direct relationship and indirect relationship.

When the gesture actor U is a person, the sensor 3 may be a person-detection sensor. When the gesture actor U is considered to wear a radio wave transmission device and the like such as a RFID tag, the sensor 3 may be a radio wave sensing sensor and the like.

The camera 5 captures an image of the gesture actor U using an image-capturing device and the like, and outputs image data of the captured image. For example, the gesture actor U is a user of the control target device 7, and inputs gesture to the gesture input apparatus 1. The camera 5 may continuously generate image data and output the image data as motion picture data, or may generate image data with a predetermined interval or with an irregular period of time and output the image data as still picture data.

The control target device 7 includes an operation control unit 71 for controlling operation of the device in accordance with a control signal given by the gesture input apparatus 1. The control target device 7 is, for example, a home electric appliance device such as a television set, an illumination device, an air conditioner, and a PC.

However, the control target device 7 is not limited thereto. The control target device 7 may be anything as long as it is a device that receives the control signal and executes processing based on the received control signal. For example, the control target device 7 may be an ATM (Automated teller machine) installed in a bank, a vending machine, and a ticket vending machine installed at a station. The control target device 7 may include the gesture input apparatus 1 provided therein, or may be configured to receive the control signal from the gesture input apparatus 1 provided externally.

### (Gesture input apparatus)

Subsequently, a functional configuration of the gesture input apparatus 1 will be explained with reference to FIG. 1. FIG. 1 is a functional block diagram illustrating an example of a functional configuration of the gesture input apparatus 1.

As shown in FIG. 1, the gesture input apparatus 1 includes a storage unit 10 and a control unit 20. The storage unit 10 and the control unit 20 will be hereinafter explained.

### [Storage unit]

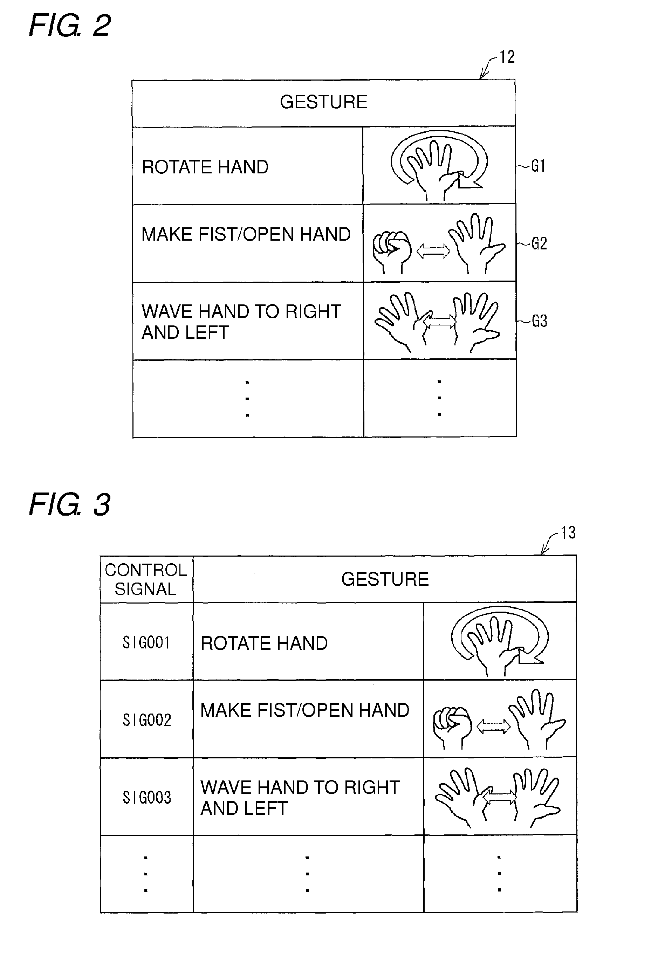

The storage unit 10 stores, e.g., various kinds of data and programs looked up by the control unit 20. More specifically, the storage unit 10 stores sensor determination reference data 11, gesture recognition data 12, and a control signal table 13. This will be hereinafter explained with reference to FIGS. 2 and 3.

The sensor determination reference data 11 are information serving as a basis for determining whether the gesture actor U is sensed or not with a sensor. For example, in the sensor determination reference data 11, a threshold value and the like corresponding to the sensor data given by the sensor is defined. More specifically, when the radio wave sensor is configured to output a radio wave strength as sensor data, a threshold value and the like of the radio wave strength is defined. For example, whether the gesture actor U is sensed or not is determined in accordance with whether the radio wave strength indicated by the sensor data given by the sensor is equal to or more than the threshold value.

The gesture recognition data 12 define a pattern for recognizing the gesture. FIG. 2 shows a specific example of the gesture recognition data 12. As shown in FIG. 2, the gesture recognition data 12 define multiple gesture patterns. For example, the gesture recognition data 12 includes "rotate hand" gesture pattern G1, "make fist/open hand" gesture pattern G2, and "wave hand to right and left" gesture pattern G3.

The control signal table 13 is a table in which a control signal to be transmitted is associated with a gesture. FIG. 3 shows a specific example of the control signal table 13. For example, in the control signal table 13, control signals SIG001, SIG002, and SIG003 are associated with the gesture patterns G1, G2, and G3, respectively.

### [Control unit]

The control unit 20 executes a program loaded from the storage unit 10 to a temporary storage unit (not shown), thereby performing various kinds of computations as well as centrally controlling each unit provided in the gesture input apparatus 1. More specifically, the control unit 20 includes a sensor information obtaining unit 21, a sensor sensing unit (sensor detection part) 22, a camera video obtaining unit 23, a gesture recognition processing unit (gesture recognition part) 24, and a device control command unit 25. The functional blocks (21 to 25) of the control unit 20 can be achieved by causing a CPU (central processing unit) to read programs stored in a storage apparatus achieved as a ROM (read only memory) to a temporary storage unit such as a RAM (random access memory) and execute the programs.

The sensor information obtaining unit 21 obtains the sensor data which are output from the sensor 3, and provides the obtained data to the sensor sensing unit 22.

The sensor sensing unit 22 determines whether the gesture actor U is sensed by the sensor or not. Furthermore, the sensor sensing unit 22 may determine whether the gesture actor U is located at a position where gesture can be input into the gesture input apparatus 1, on the basis of the sensor data.

For example, when an input is given to the sensor information obtaining unit 21 by the sensor 3, the sensor sensing unit 22 determines that the gesture actor U is sensed by the sensor.

For example, the sensor sensing unit 22 determines the sensor data on the basis of the sensor determination reference data 11 that are read from the storage unit 10, thereby determining whether there exists the gesture actor U or not.

This will be explained in more details below. For example, when the sensor data represent a radio wave strength, and the sensor determination reference data 11 define a threshold value of the radio wave strength, the sensor sensing unit 22 determines whether the radio wave strength is equal to or more than the threshold value.

For example, when the radio wave strength is equal to or more than the threshold value, the sensor sensing unit 22 determines that there exists the gesture actor U, and when the radio wave strength is less than the threshold value, the sensor sensing unit 22 determines that the gesture actor U does not exist.

However, the above example is merely an example, and is not limited thereby. A determination as to whether the gesture actor U is sensed by the sensor or not can be achieved using any method for detecting presence of an object, a person, and the like. When composite sensors are used, the determination is made on the basis of multiple pieces of sensor data and sensor determination reference data 11. Thus, the accuracy of determination as to whether the gesture actor U exists or not can be improved.

When the gesture actor U is sensed by the sensor, the sensor sensing unit 22 notifies the gesture recognition processing unit 24 that the gesture actor U is sensed by the sensor.

The camera video obtaining unit 23 obtains the image data which are output from the camera 5, and provides the obtained image data to the gesture recognition processing unit 24.

The gesture recognition processing unit 24 analyzes the image data, and performs the gesture recognition processing for recognizing the gesture indicated by the image data. More specifically, as soon as the existence of the gesture actor U is confirmed, the gesture recognition processing unit 24 starts the gesture recognition of the image data. More specifically, the gesture recognition processing unit 24 recognizes that a time point at which the gesture actor U is sensed by the sensor is a starting time point of the gesture, and starts the gesture recognition processing on the basis of the image data from the time point.

In the gesture recognition processing, the gesture recognition processing unit 24 collates the image data with the gesture recognition data 12, and determines whether the image data include a gesture matching a gesture pattern.

It should be noted that, when the image data include a gesture matching a gesture pattern, the gesture recognition processing unit 24 notifies the matched gesture pattern to the device control command unit 25.

The device control command unit 25 generates a control signal according to the gesture pattern, and outputs the control signal to the control target device 7.
More specifically, the device control command unit 25 looks up the control signal table 13, and generates the control signal associated with the gesture pattern. The device control command unit 25 outputs the generated control signal to the operation control unit 71 of the control target device 7.

When the device control command unit 25 finishes output of the control signal, the device control command unit 25 may notify the gesture recognition processing unit 24 to that effect. In addition, when the gesture recognition processing unit 24 receives a finish notification of the output of this control signal, the gesture recognition may be terminated.

The device control command unit 25 of the gesture input apparatus 1 and the operation control unit 71 of the control target device 7 may be connected in any connection form. For example, when the control target device 7 is configured to include the gesture input apparatus 1 provided therein, the device control command unit 25 of the gesture input apparatus 1 and the operation control unit 71 of the control target device 7 may be connected via a process communication, data bus, wire, and the like. When the control target device 7 is configured to receive a control signal from the gesture input apparatus 1 provided externally from the control target device 7, the device control command unit 25 of the gesture input apparatus 1 and the operation control unit 71 of the control target device 7 may be network-connected via wireless communication means or wired communication means.

### [Flow of gesture input processing]

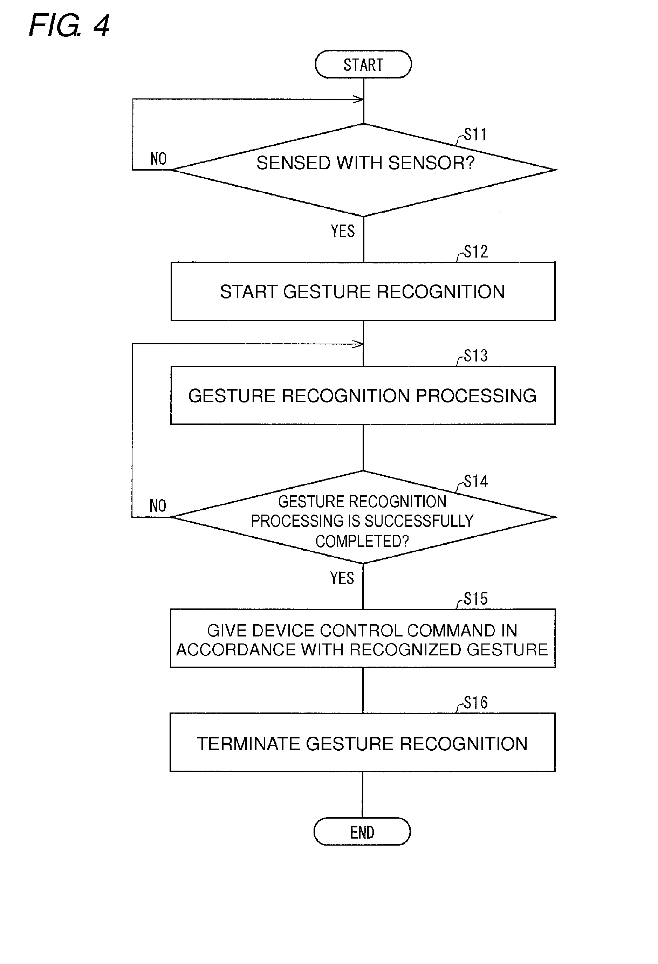

Subsequently, the gesture input processing of the gesture input apparatus 1 will be hereinafter explained with reference to FIG. 4. FIG. 4 is a flowchart illustrating an example of gesture input processing of the gesture input apparatus 1.

As shown in FIG. 4, first, the sensor sensing unit 22 determines whether the gesture actor U is sensed by the sensor, on the basis of the sensor data obtained by the sensor information obtaining unit 21 (S11).

When the gesture actor U is not sensed by the sensor (NO in S11), the sensor sensing unit 22 continuously receives the sensor data.

On the other hand, when the gesture actor U is sensed by the sensor (YES in S11), the sensor sensing unit 22 notifies the gesture recognition processing unit 24 to that effect, and accordingly, the gesture recognition processing unit 24 starts the gesture recognition based on the image data (S12).

Subsequently, the gesture recognition processing unit 24 performs the gesture recognition processing (S13), and determines whether the gesture recognition processing is successfully done or not (S14).

When the image data does not include a gesture matching a gesture pattern, and the gesture recognition processing has failed (NO in S14), the gesture recognition processing unit 24 continuously receives the image data and performs the gesture recognition processing (return back to S13).

On the other hand, when the image data includes a gesture matching a gesture pattern, and the gesture recognition processing has been successfully completed (YES in S14), the device control command unit 25 generates a control signal associated with the matched gesture pattern, and outputs the generated control signal to the control target device 7.

Thereafter, the gesture recognition processing unit 24 terminates the gesture recognition (S16), and the gesture input processing is terminated.

When the gesture actor U is sensed by the sensor, the gesture recognition processing unit 24 starts the gesture recognition based on the image data in S12, but the following configuration may also be employed alternatively.

More specifically, while the gesture actor U is not sensed by the sensor, the camera video obtaining unit 23 may be configured to stop obtaining the image data from the camera, and on the other hand, the camera video obtaining unit 23 may be configured to start providing the image data to the gesture recognition processing unit 24 when the gesture actor U is sensed by the sensor.

In S12, the gesture recognition processing unit 24 may start the gesture recognition a predetermined period of time after the time point at which the gesture actor U is sensed by the sensor.

When a place where the sensor is installed is away from a place where the camera is installed, the predetermined period of time is determined as follows. For example, the predetermined period of time may be determined in accordance with a distance between the place where the sensor is installed and the place where the camera is installed and a time which it is expected to take for the gesture actor U to move the distance.

In S14, when the gesture recognition processing fails and a predetermined period of time passes since the start of the gesture recognition, the gesture recognition may be terminated (i.e., the flow may return to S11).

In S16, the gesture recognition processing unit 24 terminates the gesture recognition, but the camera video obtaining unit 23 may also terminate obtaining the image data.

In the above case, when the gesture recognition is successfully completed, the gesture recognition is configured to be terminated. More specifically, according to this configuration, on every gesture input operation, the gesture actor U is detected.

This is because the gesture input operation may not be performed continuously, and when one gesture recognition is once finished, and subsequently, gesture recognition is performed, it may be preferable to sense the gesture actor U again.

More specifically, when there is a predetermined interval of time exists between finish of one gesture input operation and subsequent gesture input operation, it is preferable to sense the gesture actor U on every gesture input operation in terms of improving the accuracy of gesture recognition. However, the embodiment is not limited thereto, and alternatively, the gesture recognition may be performed continuously.

### (Action/effect)

As described above, the gesture input apparatus 1 for recognizing gesture made by the gesture actor U to the camera 5, and controlling the control target device 7 on the basis of the recognized gesture, wherein the gesture input apparatus includes the sensor sensing unit 22 for detecting input from the sensor 3 for measuring a physical quantity or change of the physical quantity around the gesture actor U and a gesture recognition processing unit 24 that starts gesture recognition using an image captured by the camera 5, on the basis of a time at which input from the sensor 3 is detected.

Accordingly, a starting point of the gesture recognition can be detected efficiently with a high degree of accuracy, and there is an advantage in that the accuracy of the gesture recognition can be improved.

### [Second embodiment]

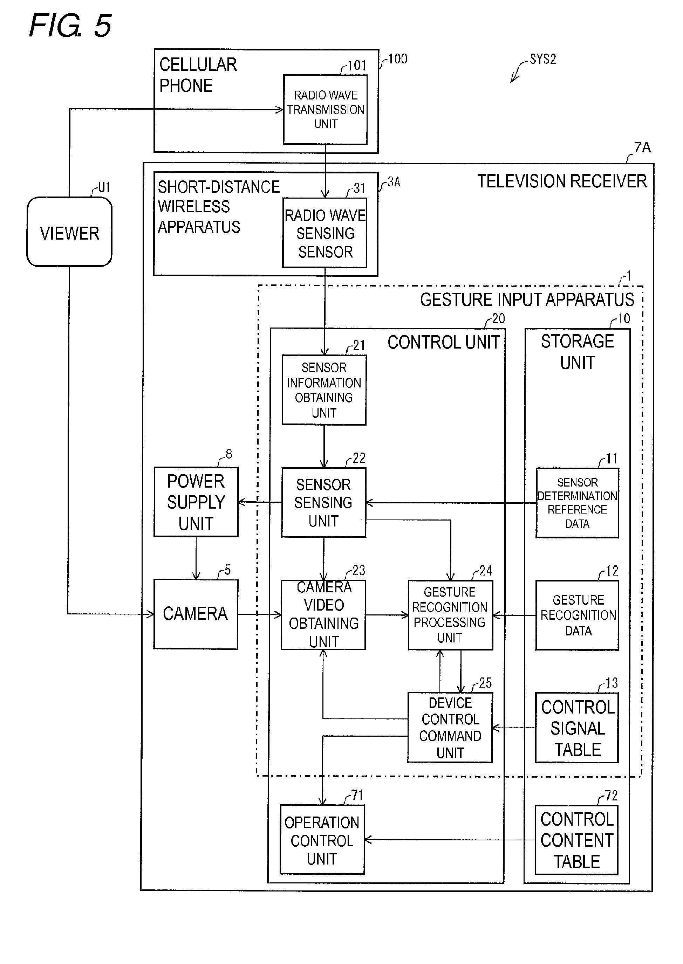

A gesture input system SYS2 according to another embodiment of the present invention will be hereinafter explained with reference to FIGS. 5 to 7. For the sake of explanation, members having the same functions as those in the drawings explained in the first embodiment will be denoted with the same reference numerals, and explanation thereabout is omitted.

### (Overview of system)

First, overview of the gesture input system SYS2 will be explained with reference to FIG. 5. The gesture input system SYS2 as shown in FIG. 5 is made by applying the configuration of the gesture input system SYS1 as shown in FIG. 1 to a more specific device.

More specifically, in the gesture input system SYS2 as shown in FIG. 5, the control target device 7 of the gesture input system SYS1 as shown in FIG. 1 is achieved as a television receiver 7A. In FIG. 5, what corresponds to the gesture actor U of FIG. 1 is a viewer U1 who uses the television receiver 7A.

The gesture input system SYS2 as shown in FIG. 5 provides a gesture input function with which the viewer U 1 who uses the cellular phone (portable communication terminal) 100 operates the television receiver 7A and views a program. In the explanation below, for example, the television receiver 7A senses the cellular phone 100 used by the viewer U1, whereby the gesture actor U is indirectly detected.

### (System configuration)

As shown in FIG. 5, the gesture input system SYS2 includes a cellular phone 100 and a television receiver 7A.

The cellular phone 100 is a communication terminal capable of communicating and connecting to a cellular phone network and a short distance wireless communication network. Examples of short distance wireless communication networks include WLAN (Wireless LAN), WiMax, and Bluetooth (registered trademark).

In the explanation below, for example, the gesture input system SYS2 includes the cellular phone 100, however, the gesture input system SYS2 is not limited thereto. The cellular phone 100 may be other portable communication terminals. For example, it may be a tablet PC or a smart phone (which is also referred to as a multi-function cellular phone).

The television receiver 7A includes a short-distance wireless apparatus 3A, a camera 5, a power supply unit 8, a storage unit 10, and a control unit 20.

The short-distance wireless apparatus 3A includes a radio wave sensing sensor 31 corresponding to the sensor 3 of FIG. 1. The radio wave sensing sensor 31 is a sensor for sensing a radio wave transmitted from the radio wave transmission unit 101 of the cellular phone 100. The radio wave transmission unit 101 transmits a radio wave of a frequency band used by the short-distance wireless communication network in accordance with operation performed by the viewer U1. For example, when the short-distance wireless network is a WLAN, the radio wave transmission unit 101 transmits a radio wave of 2.12 GHz to 2.472 GHz which is a frequency band for WLAN.

The camera 5 is what has been described above, and will not be explained again.

The power supply unit 8 provides electric power for operation of each unit of the television receiver 7A such as the camera 5. The power supply unit 8 starts and stops providing electric power to each unit in accordance with a control signal given by the device control command unit 25 explained later.

Even when the television receiver 7A is in the state of "power OFF", the power supply unit 8 provides power supply at least for causing the gesture input apparatus 1 to operate.

The television receiver 7A includes the gesture input apparatus 1 provided therein. Constituent elements provided in the gesture input apparatus 1 are what has been explained above, and will not be explained again.

The storage unit 10 and the control unit 20 are shared by the gesture input apparatus 1 and the television receiver 7A.

It should be noted that the storage unit 10 is provided with not only the constituent elements of the gesture input apparatus 1 explained above but also a control content table 72 configured such that it can be looked up by the operation control unit 71.

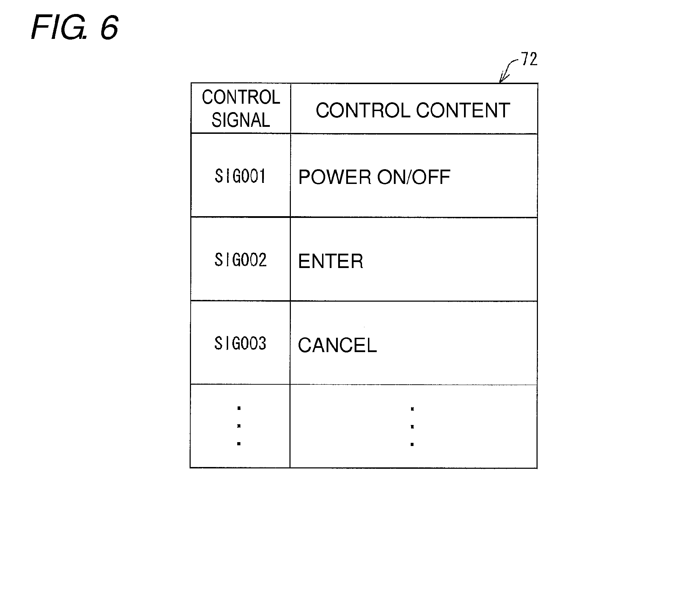

The control content table 72 is a table for defining control content of the television receiver 7A. FIG. 6 illustrates a specific example of configuration of the control content table 72. As shown in FIG. 6, in the control content table 72, a control signal that is output from the device control command unit 25 is associated with a control content which is to be executed in accordance with the control signal.

More specifically, in the control content table 72, for example, the control signals SIG001, SIG002, and SIG003 are associated with "power ON/OFF", "enter", and "cancel", respectively.

The control unit 20 includes not only the constituent elements of the gesture input apparatus 1 explained above but also the operation control unit 71 of the television receiver 7A.

### (Example of usage mode)

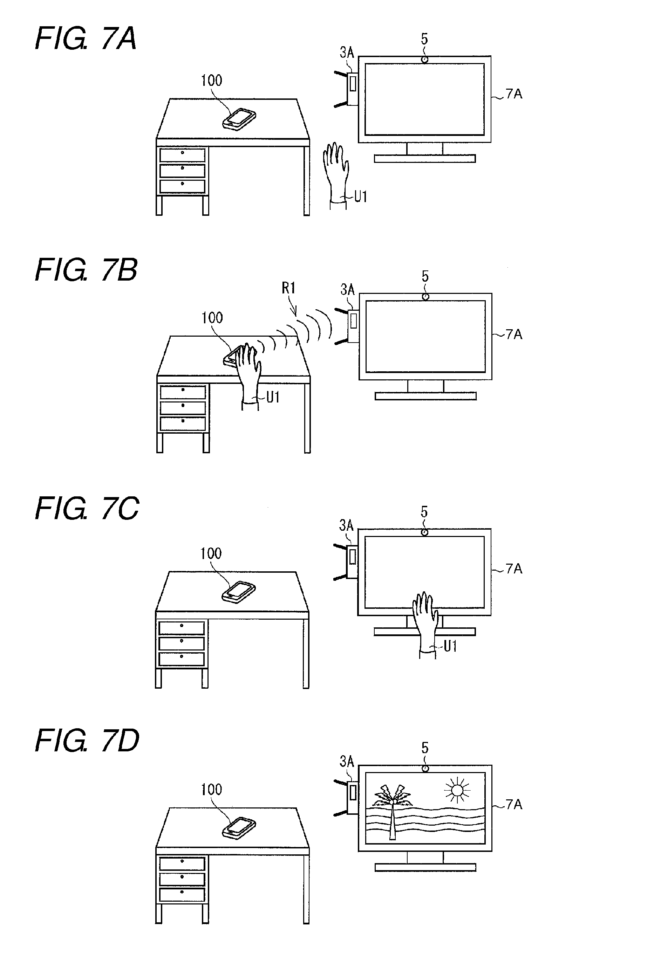

Subsequently, an example of a usage mode of the gesture input system SYS2 including the gesture input apparatus 1 will be explained with reference to FIG. 7. FIGS. 7A to 7D are figures illustrating examples of a usage mode where the television receiver 7A is turned on with the gesture input system SYS2. In the explanation below, steps corresponding to the flowchart as shown in FIG. 4 are described in parentheses. In FIGS. 7A to 7D, for the sake of convenience of explanation, the configuration of a gesture input system SYS2 is roughly shown, and FIG. 5 can be referred to for the detailed configuration thereof.

First, in the state as shown in FIG. 7A, the television receiver 7A is in OFF state. The cellular phone 100 is placed in a stationary manner on a desk placed in proximity to the television receiver 7A (for example, in the same room). The radio wave sending sensor 31 of the short-distance wireless apparatus does not sense the radio wave, and therefore, the sensor sensing unit 22 waits for the viewer U1 to be sensed (NO in S11). For example, the cellular phone 100 may be in the state of being charged. In FIGS. 7A to 7D, for the sake of convenience of explanation, only a hand of the viewer U1 is shown.

Subsequently, as shown in FIG. 7B, the viewer U1 performs operation with the radio wave transmission unit 101 of the cellular phone 100. Accordingly, a radio wave R1 is transmitted from the radio wave transmission unit 101. For example, the radio wave transmission unit 101 may have an operation unit for receiving user's operation.

The user's operation may be an operation for cancelling a lock function which restricts operation other than a predetermined operation of the cellular phone 100. The operation unit may be a physical button, or may be an input interface such as a touch panel.

The radio wave transmission unit 101 may be achieved with an application that can be introduced into the cellular phone 100. The application may have a function for remotely controlling the television receiver 7A using a radio wave.

On the other hand, in the television receiver 7A, the short-distance wireless apparatus 3A uses the radio wave sensing sensor 31 to detect the radio wave R1, and generates sensor data based on the detection result. Then, on the basis of the sensor data obtained by the sensor information obtaining unit 21, the sensor sensing unit 22 determines that the "viewer U1 is detected" (YES in S11). Accordingly, the gesture recognition processing unit 24 starts the gesture recognition (S12). When, before the viewer U1 makes gesture, the user is expected to move from a location where the cellular phone 100 is placed in a stationary manner to an image-capturing range of the camera, the gesture recognition may be started a predetermined period of time after the time when determined that "the viewer U1 is detected"..

Subsequently, as shown in FIG. 7C, the viewer U1 makes gesture to the camera 5. In this case, the viewer U1 makes "rotate hand" gesture. In response, the gesture recognition processing unit 24 executes the gesture recognition processing on the basis of the image data given by the camera 5 (S13).

Subsequently, as shown in FIG. 7D, the television receiver 7A is turned on in accordance with the gesture recognized by the gesture recognition processing unit 24. More specifically, the gesture recognition processing of the "rotate hand" gesture (gesture pattern G1 as shown in FIG. 2) is successfully completed (YES in S14), the device control command unit 25 generates a control signal SIG001 on the basis of the control signal table 13 as shown in FIG. 3, and outputs the control signal SIG001 to the operation control unit 71 (S15). The operation control unit 71 looks up the control content table 72 as shown in FIG. 6, and executes power-ON operation corresponding to the control signal SIG001. Thereafter, the gesture recognition processing unit 24 terminates the gesture recognition (S16).

Before the sensor sensing unit 22 determines that "the viewer U1 is sensed", the power supply to the camera 5 may not be provided. Then, when the sensor sensing unit 22 determines that "the viewer U1 is sensed", the power supply unit 8 may be commanded to start providing electric power to the camera 5. As a result, the power consumption of the camera 5 can be reduced.

### (Modification)

In the explanation above, the television receiver 7A is configured to include the camera 5 and the radio wave sensing sensor 31, but the embodiment is not limited thereto. The television receiver 7A may be configured to include an interface for connecting the camera 5 and the radio wave sensing sensor 31, and the camera 5 and the radio wave sensing sensor 31 may be connected via the interface.

In the above explanation, in the short-distance wireless apparatus 3A, the radio wave sensing sensor 31 for detecting a radio wave is provided. But the embodiment is not limited thereto. Alternatively, the following configuration may also be employed.

(1) The short-distance wireless apparatus 3A may detect the cellular phone 100 which joins the wireless network, and may output sensor data to that effect. When the sensor data which are output from the short-distance wireless apparatus 3A indicate that the cellular phone 100 has joined the wireless network, the sensor sensing unit 22 may determine that "the viewer U1 is sensed".

(2) In the short-distance wireless apparatus 3A, composite sensors may be provided as follows, and a radio wave and the like which are output from the cellular phone 100 can be detected in a composite manner.

More specifically, the cellular phone 100 is configured to include not only the radio wave transmission unit 101 but also an audio output unit for outputting audio in accordance with user's operation. The audio output unit outputs sound when the user performs screen input operation, receives a call, and plays music.

The short-distance wireless apparatus 3A is configured to include not only the radio wave sensing sensor 31 but also a sound sensing sensor. Accordingly, the short-distance wireless apparatus 3A can sense not only the radio wave that is output from the radio wave transmission unit 101 but also the audio that is output from the audio output unit.

The operation which the viewer U1 performs with the cellular phone 100 may be a function for cancelling the lock function. As the lock function is cancelled, the cellular phone 100 may be configured to output the radio wave and the audio.

According to the configuration, the short-distance wireless apparatus 3A can detect that the viewer U1 cancels the lock function of the cellular phone 100. As described above, when the composite sensors are arranged on the short-distance wireless apparatus 3A, the accuracy for sensing the viewer U1 can be improved.

(3) In the explanation above, the existence of the viewer U1 is sensed on the basis of the operation with the cellular phone 100, but the configuration may also be changed as follows.

More specifically, the cellular phone 100 may be changed into an infrared remote controller of the television receiver 7A, and the radio wave sensing sensor 31 may be changed into an infrared input unit. The infrared input unit detects that a gesture switch is turned on with the remote controller, thereby sensing the existence of the viewer U1.

### [Third embodiment]

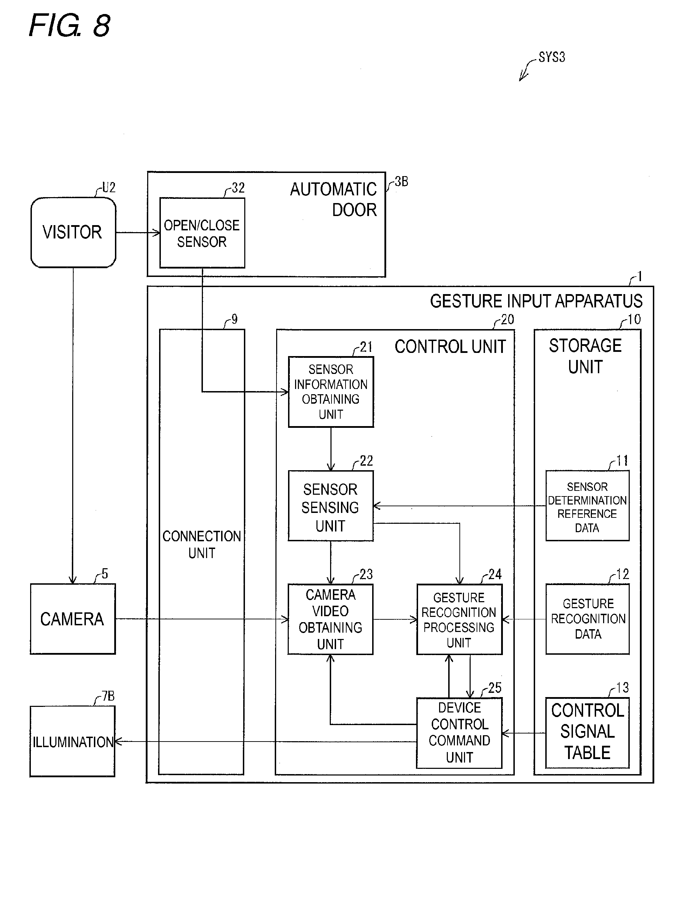

A gesture input system SYS3 according to still another embodiment of the present invention will be hereinafter explained with reference to FIGS. 8 to 10. For the sake of explanation, members having the same functions as those in the drawings explained above will be denoted with the same reference numerals, and explanation thereabout is omitted.

### (Overview of system)

First, overview of the gesture input system SYS3 will be explained with reference to FIG. 8. The gesture input system SYS3 as shown in FIG. 8 is made by applying the configuration of the gesture input system SYS1 as shown in FIG. 1 to an indoor illumination system.

More specifically, in the gesture input system SYS3 as shown in FIG. 8, the control target device 7 of the gesture input system SYS1 as shown in FIG. 1 is achieved as an illumination device 7B. In FIG. 8, what corresponds to the gesture actor U of FIG. 1 is a visitor U2 who enters into a room where an illumination device is installed.

The gesture input system SYS3 as shown in FIG. 8 provides a gesture input function which allows the visitor U2 to enter into the room where an automatic door 3B is provided to operate an illumination device 7B provided in the room. In the explanation below, for example, the visitor U2 is sensed at the automatic door 3B, so that the gesture actor U is directly detected.

### (System configuration)

As shown in FIG. 8, the gesture input system SYS3 includes a gesture input apparatus 1, an automatic door 3B, a camera 5, and an illumination device 7B.

As compared with the gesture input apparatus 1 as shown in FIG. 1, the gesture input apparatus 1 as shown in FIG. 8 additionally includes a connection unit 9.

The connection unit 9 includes a terminal or a network interface for connecting the gesture input apparatus 1 with the automatic door 3B, the camera 5, and the illumination device 7B. Any form of connection may be employed for the connection unit 9. For example, the connection unit 9 may have a terminal for connecting a metal wire. The connection unit 9 may have a wired network interface or a wireless LAN (Local Area Network) network interface.

The gesture recognition data 12 and the control signal table 13 of the gesture input apparatus 1 included in the gesture input system SYS3 may omit definition concerning the gesture patterns G2 and G3.

The automatic door 3B has an open/close-type door, which opens and closes when an open/close sensor 32 senses the visitor U2. The open/close sensor 32 senses whether there is a person in a predetermined range. For example, the open/close sensor 32 may be, e.g., a sensor that detects whether there is a person or not using infrared light, but is not limited thereto. Any person-detection sensor may be used. The open/close sensor 32 is connected to the connection unit 9 of the gesture input apparatus 1.

The camera 5 is what has been described above, and will not be explained again.

The illumination device 7B is turned ON/OFF in accordance with a power ON/OFF control signal which is output from the device control command unit 25 of the gesture input apparatus 1.

### (Example of usage mode)

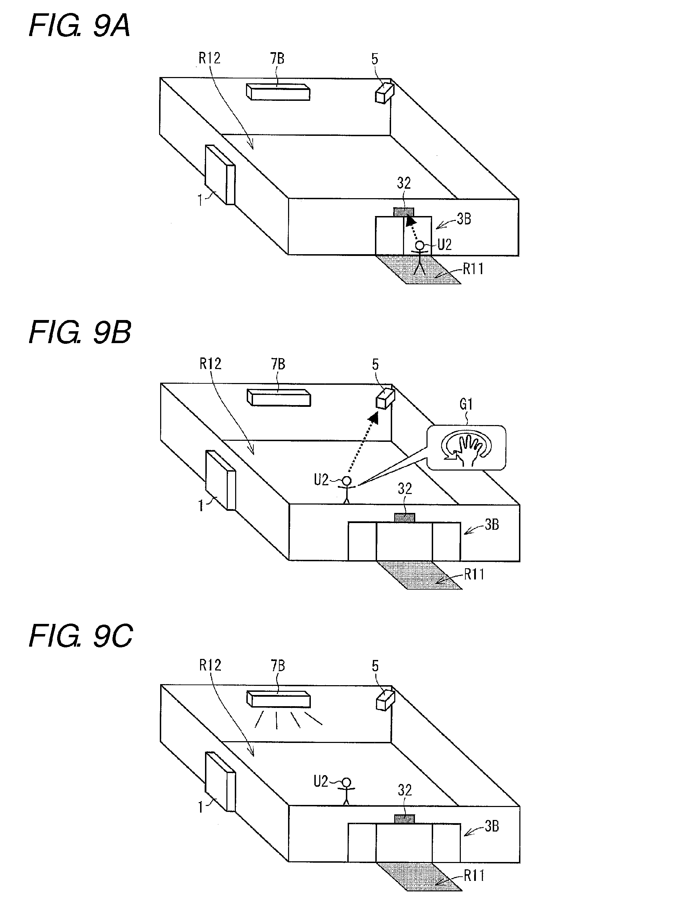

Subsequently, an example of a usage mode of the gesture input system SYS3 including the gesture input apparatus 1 will be explained with reference to FIG. 9. FIGS. 9A to 9C are figures illustrating an example of a usage mode where the illumination device 7B is turned on with the gesture input system SYS3. In the explanation below, steps corresponding to the flowchart of FIG. 4 are described in parentheses. In FIGS. 9A to 9C, for the sake of convenience of explanation, the configuration of the gesture input system SYS3 is roughly shown, and FIG. 8 can be referred to for the detailed configuration thereof. FIGS. 9A to 9C do not show connection between the gesture input apparatus 1, the automatic door 3B, the camera 5, and the illumination device 7B.

In FIGS. 9A to 9C, the sensing range of the open/close sensor 32 is denoted with symbol R11, and the image-capturing range of the camera 5 is denoted with symbol R12. The image-capturing range R12 of the camera 5 is set at a position where the user enters from the outside into the room through the automatic door 3B. As shown in the figure, the illumination device 7B is installed in the room.

First, as shown in FIG. 9A, the visitor U2 is now at the outside of the room, and is going to enter into the room from now on. At this occasion, the open/close sensor 32 senses the visitor U2 having moved into the sensing range R11, and accordingly, the sensor sensing unit 22 determines that "the visitor U2 is sensed" (YES in S11).

Subsequently, as shown in FIG. 9B, when the open/close sensor 32 senses the visitor U2, the door of the automatic door 3B opens, and on the other hand, the gesture recognition processing unit 24 starts the gesture recognition (S12). When the visitor U2 moves into the room, the visitor U2 comes into the image-capturing range R12 of the camera 5. It should be noted that the gesture recognition processing unit 24 may start the gesture recognition after a predetermined period of time when determined that "the visitor U2 is detected".

The visitor U2 who has moved into the room makes gesture of power ON/OFF toward the camera 5. More specifically, the visitor U2 makes "rotate hand" gesture of the gesture pattern G1. In response, the gesture recognition processing unit 24 executes the gesture recognition processing on the basis of the image data given by the camera 5 (S13).

Subsequently, as shown in FIG. 9C, the illumination device 7B is turned on in accordance with the gesture recognized by the gesture recognition processing unit 24. More specifically, when the gesture recognition processing of the "rotate hand" gesture (gesture pattern G1 as shown in FIG. 2) is successfully completed (YES in S14), the device control command unit 25 generates a control signal SIG001 on the basis of the control signal table 13 as shown in FIG. 3, and outputs the control signal SIG001 to the illumination device 7B (S15).

The illumination device 7B executes power-ON operation corresponding to the control signal SIG001. Thereafter, the gesture recognition processing unit 24 terminates the gesture recognition (S16).

### (Modification)

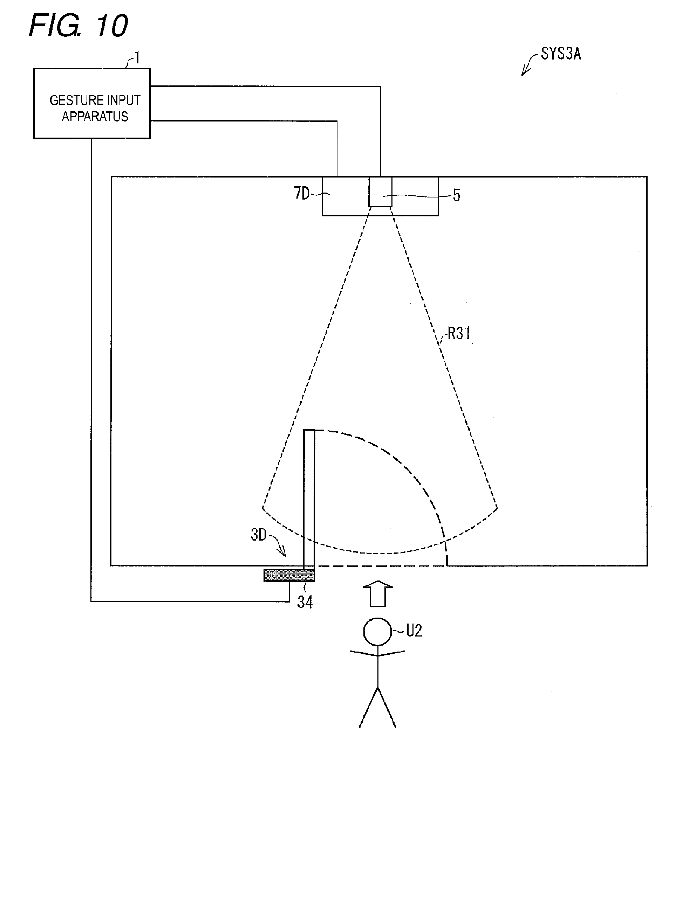

A modification of the gesture input system SYS3 will be hereinafter explained with reference to FIG. 10. FIG. 10 is a figure illustrating an example of configuration of a gesture input system SYS3A which is a modification of the gesture input system SYS3.

As shown in FIG. 10, the gesture input system SYS3A includes the gesture input system SYS1, a hinged door 3D provided with the open/close sensor 34, a camera 5, and an ATM 7D.

More specifically, as compared with the gesture input system SYS3, the gesture input system SYS3A is configured such that the automatic door 3B is changed to the hinged door 3D, and the illumination device 7B is changed to the ATM 7D.

The open/close sensor 34 senses whether the hinged door 3D is open or closed. The image-capturing range R31 of the camera 5 is set at a position where the user opens the hinged door 3D and enters into the room.

When the open/close sensor 34 senses that the visitor U2 opens the hinged door 3D, the gesture recognition processing unit 24 starts the gesture recognition. More specifically, the gesture recognition processing unit 24 starts the gesture recognition on the basis of the image data obtained by causing the camera 5 to capture an image in the image-capturing range R31.

At this occasion, the visitor U2 makes gesture to the camera 5, and the gesture recognition processing unit 24 performs the gesture recognition processing, and then, the device control command unit 25 outputs a control signal to the ATM in accordance with the recognized gesture. As a result, the ATM 7D performs operation in accordance with the control signal.

### [Fourth embodiment]

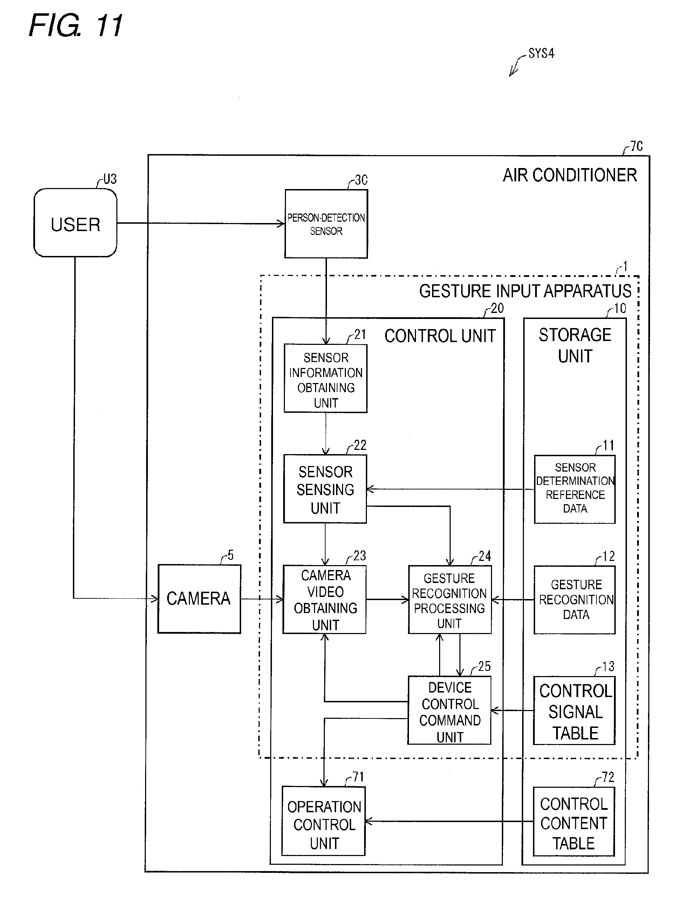

A gesture input system SYS4 according to still another embodiment of the present invention will be hereinafter explained with reference to FIGS. 11 to 12. For the sake of explanation, members having the same functions as those in the drawings explained in the first embodiment will be denoted with the same reference numerals, and explanation thereabout is omitted.

### (Overview of system)

First, overview of the gesture input system SYS4 will be explained with reference to FIG. 11. The gesture input system SYS4 as shown in FIG. 11 is made by applying the configuration of the gesture input system SYS1 as shown in FIG. 1 to a more specific device.

More specifically, in the gesture input system SYS4 as shown in FIG. 11, the control target device 7 of the gesture input system SYS1 as shown in FIG. 1 is achieved as an air conditioner 7C. In FIG. 11, what corresponds to the gesture actor U of FIG. 1 is a user U3 who uses the air conditioner 7C.

The gesture input system SYS4 as shown in FIG. 11 provides a gesture input function with which the user U3 who uses the air conditioner 7C operates the air conditioner 7C. In the explanation below, for example, the user U3 is sensed with a person-detection sensor provided in the air conditioner 7C, so that the user U3 is sensed, and the gesture actor U is directly detected.

### (System configuration)

As shown in FIG. 11, the gesture input system SYS4 is constituted by the air conditioner 7C. The air conditioner 7C includes a person-detection sensor 3C, a camera 5, a storage unit 10, and a control unit 20.

The person-detection sensor 3C senses whether there is a person in a predetermined range. For example, the person-detection sensor 3C may be, e.g., a sensor that detects whether there is a person or not using infrared light, but is not limited thereto. Any person-detection sensor may be used. The person-detection sensor 3C may be provided in proximity to the camera 5, so that at least a portion of the sensing range of the person-detection sensor 3C matches the image-capturing range of the camera 5.

The camera 5 is what has been described above, and will not be explained again.

The air conditioner 7C includes the gesture input apparatus 1 provided therein. Constituent elements provided in the gesture input apparatus 1 are what has been explained above, and will not be explained again.

The storage unit 10 and the control unit 20 are shared by the gesture input apparatus 1 and the air conditioner 7C.

The control content table 72 stored in the storage unit 10 and the operation control unit 71 provided in the control unit 20 are what has been described above, and the detailed description thereabout will not be explained again.

### (Example of usage mode)

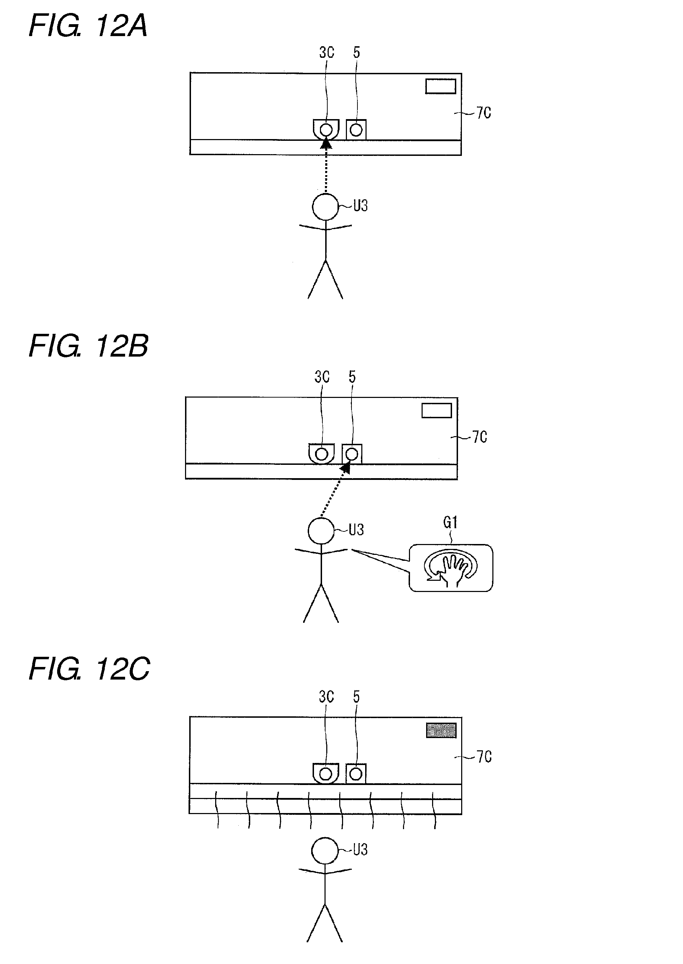

Subsequently, an example of a usage mode of the gesture input system SYS4 including the gesture input apparatus 1 will be explained with reference to FIG. 12. FIGS. 12A to 12C are figures illustrating an example of a usage mode where the air conditioner 7C is turned on with the gesture input system SYS4. In the explanation below, steps corresponding to the flowchart as shown in FIG. 4 are described in parentheses. In FIGS. 12A to 12C, for the sake of convenience of explanation, the configuration of a gesture input system SYS4 is roughly shown, and FIG. 11 can be referred to for the detailed configuration thereof.

First, in the state as shown in FIG. 12A, the air conditioner 7C is in OFF state. As shown in the figure, the person-detection sensor 3C and the camera 5 are arranged side by side on the front surface of the air conditioner 7C. For this reason, the sensing range of the person-detection sensor 3C and the image-capturing range of the camera 5 are in front of the air conditioner 7C. It should be noted that the configuration of arranging the person-detection sensor 3C and the camera 5 side by side is merely an example, and the embodiment is not limited thereto. As long as the user U3 can be sensed and the image of the user U3 can be captured, any configuration may be employed.

In this case, when the sensor sensing unit 22 waits for sensing the user U3 (S11), and the user U3 moves in front of the air conditioner 7C, the person-detection sensor 3C senses the user U3. Then, on the basis of the sensor data obtained by the person-detection sensor 3C, the sensor sensing unit 22 determines that the "user U3 is sensed" (YES in S11). Accordingly, the gesture recognition processing unit 24 starts the gesture recognition (S12).

Subsequently, as shown in FIG. 12B, the user U3 makes gesture to the camera 5. In this case, the user U3 makes "rotate hand" gesture. In response, the gesture recognition processing unit 24 executes the gesture recognition processing on the basis of the image data given by the camera 5 (S13).

Subsequently, as shown in FIG. 12C, the air conditioner 7C is turned on in accordance with the gesture recognized by the gesture recognition processing unit 24. More specifically, the gesture recognition processing of the "rotate hand" gesture (gesture pattern G1 as shown in FIG. 2) is successfully completed (YES in S14), the device control command unit 25 generates a control signal SIG001 on the basis of the control signal table 13 as shown in FIG. 3, and outputs the control signal SIG001 to the operation control unit 71 (S15). The operation control unit 71 looks up the control content table 72 as shown in FIG. 6, and executes power-ON operation corresponding to the control signal SIG001. Thereafter, the gesture recognition processing unit 24 terminates the gesture recognition (S16).

In the gesture input system SYS4, the air conditioner 7C may be changed to an ATM, a ticket vending machine, a vending machine, and the like. More specifically, the gesture input system SYS4 may be configured such that, when the user U3 comes to a position in front of the ATM and the like, the ATM and the like senses the user U3, and starts the gesture recognition, and further various kinds of services are provided in accordance with the gesture.

### (Modification)

In the explanation above, the air conditioner 7C is configured to include the camera 5 and the radio wave sensing sensor 31, but the embodiment is not limited thereto. The air conditioner 7C may be configured to include an interface for connecting the camera 5 and the person-detection sensor 3C, and the camera 5 and the person-detection sensor 3C may be connected via the interface.

### [Fifth embodiment]

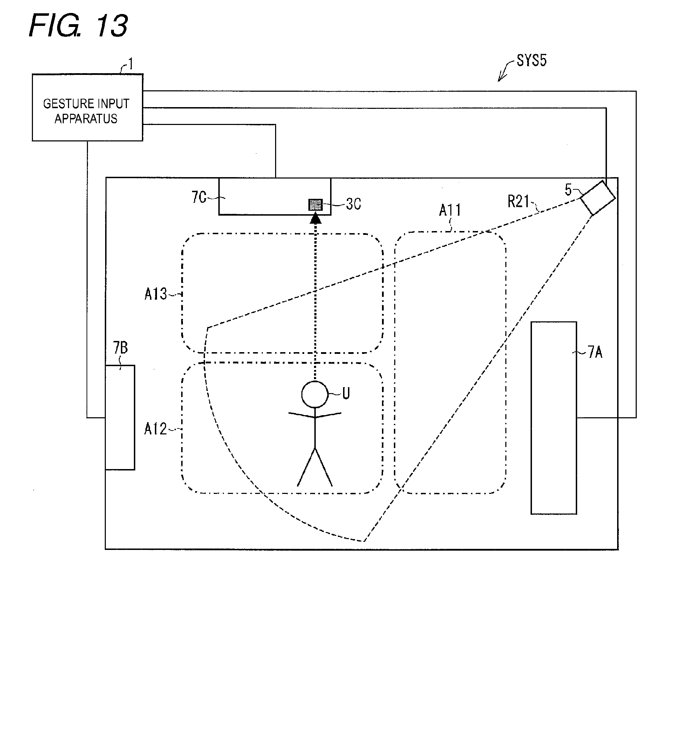

A gesture input system SYS5 according to still another embodiment of the present invention will be hereinafter explained with reference to FIG. 13. For the sake of explanation, members having the same functions as those in the drawings explained above will be denoted with the same reference numerals, and explanation thereabout is omitted.

### (Overview of system)

First, overview of the gesture input system SYS5 will be explained with reference to FIG. 13. The gesture input system SYS5 as shown in FIG. 13 is to centrally operate multiple control target devices.

The input system SYS5 as an example of which is shown in FIG. 13 includes, as control target devices, the television receiver 7A as shown in FIG. 5, the illumination device 7B as shown in FIG. 8, and the air conditioner 7C as shown in FIG. 11. The gesture input system SYS5 explained below can operate these control target devices in accordance with the position of the gesture actor U.

### (System configuration)

The gesture input system SYS5 includes a gesture input apparatus 1, a camera 5, the television receiver 7A, the illumination device 7B, and the air conditioner 7C. The gesture input system SYS5 adopts the television receiver 7A, the illumination device 7B, and the air conditioner 7C provided in a room as the control target device 7.

It should be noted that the configuration of each unit of the gesture input apparatus 1, the camera 5, the television receiver 7A, the illumination device 7B, and the air conditioner 7C are what has been described above, and the detailed description thereabout will not be explained again.

However, in the explanation below, the configuration thereof is changed as follows. First, the gesture input apparatus 1 and the camera 5 provided in the television receiver 7A, the illumination device 7B and the air conditioner 7C are respectively integrated as the gesture input apparatus 1 and the camera 5 as shown in FIG. 13. The image-capturing range R21 of the camera 5 generally covers the inside of the room.

The person-detection sensor 3C of the air conditioner 7C is used as a sensor for sensing the gesture actor U. More specifically, the person-detection sensor 3C is connected with the gesture input apparatus 1 and outputs sensor data to the gesture input apparatus 1.

On the basis of the sensor data of the person-detection sensor 3C, it can detect which section in the room the gesture actor U exists in. More specifically, the sensor sensing unit 22 can determine, from the sensor data, which of a section A11 in front of the television receiver 7A, a section A12 in front of the illumination device 7B, and a section A13 in front of the air conditioner 7C the gesture actor U exists in. Any technique can be used as a method for determining a section with the sensor sensing unit 22. For example, there is a method for measuring a distance from the gesture actor U using a sensor, and making determination based on the measured distance.

For example, the device control command unit 25 outputs a control signal to a device associated with the section where the gesture actor U is present. In the explanation below, the television receiver 7A, the illumination device 7B, and the air conditioner 7C are respectively associated with the section A11, the section A12 in front, and the section A13. More specifically, each device is associated with a section in front of the device.

### (Example)

Subsequently, an example of the gesture input system SYS5 including the gesture input apparatus 1 will be explained with reference to FIG. 13.

When the person-detection sensor 3C senses the gesture actor U in the section A12, the sensor sensing unit 22 detects that the gesture actor U is sensed and the gesture actor U exists in the section A12, on the basis of the data which are output from the person-detection sensor 3C.

Accordingly, the gesture recognition processing unit 24 performs the gesture recognition processing on the basis of the image data which are output from the camera 5. In this case, for example, suppose that the gesture made by the gesture actor U is a gesture for turning on the illumination device 7B (gesture pattern G1 as shown in FIG. 6).

Subsequently, the device control command unit 25 outputs a control signal SIG001 to the illumination device 7B corresponding to the section A12 where the gesture actor U exists. Accordingly, the illumination device 7B is turned on.

Thereafter, the gesture recognition processing unit 24 terminates the gesture recognition, and the gesture input processing is terminated.

### (Modification)

In the explanation above, the control signal is output to the control target device in accordance with the position of the gesture actor U, but the embodiment is not limited thereto. Regardless of the position of the gesture actor U, the order according to which the control target device operates with gesture input may be defined in advance.

For example, the first gesture recognition in the room may be associated with the illumination device 7B, and the second gesture recognition may be associated with the air conditioner 7C, and the third gesture recognition may be associated with the television receiver 7A.

According to the configuration, first, the illumination device 7B is turned on in accordance with the first gesture recognition of the gesture actor U who has entered into the room. Thereafter, with the second and third gesture recognitions, the air conditioner 7C and the television receiver 7A are turned on, respectively.

Therefore, it would be more convenient when the order according to which the control target device is operated is determined in advance. [Appendix] Each block of the gesture input apparatus 1, i.e., in particular, the control unit 20, may be constituted by either hardware logic or may be achieved with software using a CPU as explained below.

More specifically, the gesture input apparatus 1 includes a CPU (central processing unit) executing commands of a control program achieving each function and a storage device (recording medium) such as a memory storing the program and various kinds of data such as a ROM storing the program, a RAM (random access memory) in which the program is extracted. Further, an object of the present invention can also be achieved by providing the gesture input apparatus 1 with a recording medium which records program codes of the control program of the gesture input apparatus 1 which is software achieving the above functions (execution format program, intermediate code program, source program) in a computer-readable manner, and by causing the computer (or a CPU or an MPU) to read and execute the program codes recorded in the recording medium.

Examples of recording media include a tape system such as a magnetic tape and a cassette tape, a disk system including a magnetic disk such as a floppy (registered trademark) disk/a hard disk and an optical disk such as CD-ROM/MO/MD/DVD/CD-R, a card system such as an IC card (including a memory card)/an optical card, and a semiconductor memory system such as a mask ROM/EPROM/EEPROM/flash ROM.

Alternatively, the gesture input apparatus 1 may be configured to be able to connect to a communication network, and the program codes may be provided via the communication network. This communication network is not particularly limited. For example, the Internet, an intranet, an extranet, LAN, ISDN, VAN, CATV communication network, virtual private network, telephone network, mobile communication network, satellite communication network, and the like can be used as the communication network. A transmission medium constituting the communication network is not particularly limited. For example, the transmission medium may be a wired medium such as IEEE1394, USB, Power Line Communications, cable TV network, telephone line, and ADSL line. Alternatively, the transmission medium may be achieved wirelessly using, e.g., infrared communication such as IrDA and a remote controller, Bluetooth (registered trademark), 802.11 wireless network, HDR, cellular phone network, satellite circuit, digital terrestrial network, and the like. It should be noted that the present invention can also be achieved with a mode of computer data signal embedded into a carrier wave, which is realized as electronic transmission of the above program code.

The present invention is not limited to each embodiment explained above. The present invention can be changed in various manners within the scope described in claims. The technical scope of the present invention also includes embodiments obtained by appropriately combining technical means disclosed in each of the different embodiments.

### [Industrial Applicability]

The present invention can be used for a gesture input apparatus for operation input with gesture recognition.

## Claims

1. A gesture input apparatus that recognizes gesture made by a gesture actor in front of a camera, and controls a control target device on the basis of the recognized gesture,
the gesture input apparatus comprising:
a sensor detection part configured to detect an input from a sensor; and
a gesture recognition part configured to start gesture recognition using an image captured by the camera, on the basis of a time when the input from the sensor is detected.

2. The gesture input apparatus according to claim 1, wherein the sensor is a radio wave sensing sensor configured to sense a radio wave used for wireless communication, and
the sensor detection part detects the input from the radio wave sensing sensor.

3. The gesture input apparatus according to claim 1 or 2, wherein when the gesture recognition part successfully performs the gesture recognition, the gesture recognition part terminates the gesture recognition.

4. The gesture input apparatus according to any one of claims 1 to 3, wherein when a predetermined period of time passes since a time point at which the gesture recognition is started, the gesture recognition part terminates the gesture recognition.

5. The gesture input apparatus according to any one of claims 1 to 4, wherein when the sensor detection part detects the input from the sensor, the camera is turned on.

6. A control program for operating the gesture input apparatus according to any one of claims 1 to 5, wherein the control program causes a computer to function as each of the parts.

7. A computer-readable recording medium recorded with the control program according to claim 6.

8. An electronic device comprising:
the gesture input apparatus according to any one of claims 1 to 5;
a sensor configured to output sensor data to the gesture input apparatus;
a camera configured to output a captured image to the gesture input apparatus; and
a control target device controlled by the gesture input apparatus.

9. An electronic device comprising:
the gesture input apparatus according to any one of claims 1 to 5;
an interface configured to connect with a sensor that outputs sensor data;
an interface configured to connect with a camera that outputs a captured image; and
a control target device controlled by the gesture input apparatus.

10. A gesture input system comprising:
the gesture input apparatus according to any one of claims 1 to 5;
a sensor configured to output sensor data to the gesture input apparatus;
a camera configured to output a captured image to the gesture input apparatus; and
a control target device controlled by the gesture input apparatus.

11. The gesture input system according to claim 10, wherein the control target device is installed in a room,
the sensor is configured to be capable of sensing a gesture actor entering into the room from an entrance, and
the camera is configured to be capable of capturing an image in a predetermined range around the entrance of the room.

12. A control method of a gesture input apparatus that recognizes gesture made by a gesture actor in front of a camera, and controls a control target device on the basis of the recognized gesture,
the control method comprising:
a sensor detection step for detecting an input from a sensor; and
a gesture recognition step for starting gesture recognition using an image captured by the camera, on the basis of a time when the input from the sensor is detected.
